# EUROPÄISCHE PATENTANMELDUNG

(11) **EP 3 852 220 A1**
(43) Veröffentlichungstag der Anmeldung: **21.07.2021**
(21) Anmeldenummer: 20213644.6
(22) Anmeldetag: 14.12.2020
(51) Int. Cl.: H02J 7/00

(54) **SPEICHEREINHEIT FÜR MOBILES HAUSHALTSGERÄT UND LADEGERÄT**

(30) Priorität: 14.01.2020 DE 102020100710
(71) Anmelder: Miele & Cie. KG, 33332 Gütersloh (DE)
(72) Erfinder: Hartmann, Julian, 33332 Gütersloh (DE); Walfort, Dennis, 33604 Bielefeld (DE)

(57) **Zusammenfassung**

Die Erfindung betrifft eine Speichereinheit (10) für ein mobiles Haushaltsgerät, insbesondere einen Staubsauger oder Saugroboter, mit einem Akkumulator (12) zum Speichern von elektrischer Energie, wobei der Akkumulator (12) mittels eines Ladegeräts (50) wiederaufladbar ist;, und eine Sperreinrichtung (14A), bevorzugt als First-Level-Protection, welche dazu eingerichtet ist, einen Ladepfad zum Aufladen des Akkumulators (12) mittels des Ladegeräts (50) zu sperren oder freizugeben, wobei die Speichereinheit (10) eine Prüfeinheit (16) umfasst, welche dazu eingerichtet ist, eine spezifische Prüfimpedanz (Z) im Ladegerät (50) zu erfassen und bei Erfassen der spezifischen Prüfimpedanz im Ladegerät (50) eine Freigabe des Ladepfads durch die Sperreinrichtung (14A) zu veranlassen und/oder bei Nicht-Erfassen der spezifischen Prüfimpedanz (Z) im Ladegerät (50) eine Sperrung des Ladepfads durch die Sperreinrichtung (14A) zu veranlassen. Die Erfindung betrifft weiter ein Ladegerät (50), mit einer Ladeschaltung (52) zum Aufladen eines Akkumulators (12) einer Speichereinheit (10) eines Haushaltsgeräts, und einer Sperreinrichtung (14A), bevorzugt als First-Level-Protection, welche dazu eingerichtet ist, einen Ladepfad zum Aufladen des Akkumulators (12) mittels der Ladeschaltung (52) zu sperren oder freizugeben, wobei die Ladeschaltung (52) eine Prüfeinheit (16) umfasst, welche dazu eingerichtet ist, eine spezifische Prüfimpedanz in der Speichereinheit (10) zu erfassen und bei Erfassen der spezifischen Prüfimpedanz in der Speichereinheit (10) eine Freigabe des Ladepfads durch die Sperreinrichtung (14A) zu veranlassen und/oder bei Nicht-Erfassen der spezifischen Prüfimpedanz (Z) in der Speichereinheit (10) eine Sperrung des Ladepfads durch die Sperreinrichtung (14A) zu veranlassen.

## Beschreibung

Die Erfindung betrifft eine Speichereinheit für ein mobiles Haushaltsgerät, insbesondere einen mobilen Staubsauger, mit einer Speichereinheit, welche einen Akkumulator zum Speichern von elektrischer Energie aufweist, wobei der Akkumulator mittels eines Ladegeräts wiederaufladbar ist, und einer Sperreinrichtung, welche dazu eingerichtet ist, einen Ladepfad zum Aufladen des Akkumulators mittels des Ladegeräts zu sperren und freizugeben.

Ferner betrifft die Erfindung ein Ladegerät mit einer Ladeschaltung zum Aufladen eines Akkumulators einer Speichereinheit eines Haushaltsgeräts.

Darüber hinaus betrifft die Erfindung ein Gerätesystem mit einem mobilen Haushaltsgerät, welches eine Speichereinheit aufweist, wobei die Speichereinheit einen wiederaufladbaren Akkumulator zum Speichern von elektrischer Energie umfasst, und einem Ladegerät zum Aufladen des Akkumulators der Speichereinheit des Haushaltsgeräts.

Moderne mobile Haushaltsgeräte sind üblicherweise mit einem Akkumulator aus mehreren zusammengeschalteten Akkumulatorzellen ausgestattet. Die Akkumulatorzellen sind dabei in der Regel Bestandteil eines sogenannten Akkupacks, wobei der Akkupack außerdem eine Steuerungs- oder Regelungseinrichtung für den Lade- und/oder Entladebetrieb der Akkumulatorzellen umfasst. Entsprechende Steuerungs- oder Regelungseinrichtungen werden in diesem Zusammenhang auch als Batterie-Management-Systeme bezeichnet. Solche Batterie-Management-Systeme können neben der Überwachung des Lade- und/oder Entladebetriebs des Akkumulators auch Zusatzfunktionen, wie beispielsweise die Ladezustandserkennung, umsetzen.

Bei entsprechenden Akkupacks besteht das Problem, dass bei einer Beschädigung der Akkumulatorzellen oder am Ende der Lebensdauer des Akkumulators der gesamte Akkupack samt Batterie-Management-System auszutauschen bzw. zu ersetzen ist, da das Batterie-Management-System nicht zerstörungsfrei von dem Akkupack gelöst werden kann. In diesem Fall kommt es also zu einer Entsorgung eines funktionsfähigen Batterie-Management-Systems.

In diesem Zusammenhang bestehen Bestrebungen, zumindest einzelne Bestandteile eines Batterie-Management-Systems, wie beispielsweise eine Ladeschutzschaltung, von dem Akkupack in das Ladegerät zu verlagern. Hierbei besteht jedoch das Problem, dass das Laden des Akkumulators des Haushaltsgeräts zu einer Beschädigung der Akkumulatorzellen führen kann, wenn versehentlich ein ungeeignetes Ladegerät ohne eine entsprechende Ladeschutzschaltung verwendet wird.

Die der Erfindung zugrundeliegende Aufgabe besteht somit darin, die Betriebssicherheit beim Laden eines Akkumulators eines mobilen Haushaltsgeräts durch eine vorgeschaltete Überprüfung des verwendeten Ladegeräts zu erhöhen.

Die Aufgabe wird gelöst durch ein mobiles Haushaltsgerät der eingangs genannten Art, wobei die Speichereinheit des erfindungsgemäßen Haushaltsgeräts eine Prüfeinheit umfasst, welche dazu eingerichtet ist, eine spezifische Prüfimpedanz im Ladegerät zu erfassen und bei Erfassen der spezifischen Prüfimpedanz im Ladegerät eine Freigabe des Ladepfads durch die Sperreinrichtung zu veranlassen.

Die Erfindung macht sich die Erkenntnis zunutze, dass über die Erfassung der spezifischen Prüfimpedanz im Ladegerät erkannt werden kann, ob sich das Ladegerät zum Aufladen des Akkumulators eignet. Es ist keine zusätzliche Zweidrahtverbindung zwischen dem Ladegerät und der Speichereinheit des Haushaltsgeräts erforderlich, um einen Schutz gegen die Verwendung eines ungeeigneten Ladegeräts umzusetzen. Die Gefährdung des Akkumulators aufgrund ungeeigneter Ladeparameter während des Ladevorgangs beschädigt zu werden, wird somit eliminiert oder zumindest erheblich verringert. Das die Prüfimpedanz aufweisende geeignete Ladegerät stimmt den Ladevorgang und die Ladeparameter optimal auf die Speichereinheit des Haushaltsgeräts ab. Das Ladegerät führt den Ladevorgang folglich mit optimalen Ladeparametern aus. Die Einhaltung der optimalen Ladeparameter während des Ladevorgangs gewährleistet eine lange Lebensdauer der Speichereinheit und schützt den Akkumulator vor thermischer Überlastung. Eine beschleunigte Alterung und eine Zellbeschädigung werden somit effektiv vermieden.

Die Speichereinheit kann ein Akkupack sein und/oder ein Speichergehäuse aufweisen. Der Akkumulator kann eine oder mehrere Akkumulatorzellen umfassen. Die Akkumulatorzellen können Lithium-Ionen-Zellen sein. Die eine oder die mehreren Akkumulatorzellen und die Prüfeinheit sind vorzugsweise nicht trennbar voneinander in dem Speichergehäuse der Speichereinheit angeordnet. Die Akkumulatorzellen sind vorzugsweise Bestandteile des Akkupacks. Der Akkumulator kann dazu eingerichtet sein, im IU-Ladeverfahren bzw. im CC/CV (constant current / constant voltage) Ladeverfahren bei konstantem Strom mit konstanter Spannung geladen zu werden. Die Prüfeinheit kann dazu eingerichtet sein, eine kapazitive und/oder induktive Prüfimpedanz zu erfassen. Die Sperreinrichtung kann ein Schalter sein.

In einer bevorzugten Ausführungsform des erfindungsgemäßen Haushaltsgeräts beinhaltet die Speichereinheit keine separate Ladeschutzschaltung, welche den Akkumulator während des Ladens vor ungeeigneten Temperaturen, Ladespannungen und/oder Ladeströmen schützt. Eine entsprechende Ladeschutzschaltung ist nicht erforderlich, da die Sperreinrichtung den Ladepfad nur dann freigibt, wenn die spezifische Prüfimpedanz im Ladegerät erfasst wurde. Wenn die spezifische Prüfimpedanz im Ladegerät erfasst wurde, kann davon ausgegangen werden, dass es sich bei dem Ladegerät um ein die Ladeparameter in geeigneter Weise einstellendes Ladegerät handelt, sodass keine separate Ladeschutzschaltung in der Speichereinheit des Haushaltsgeräts notwendig ist. Die Speichereinheit kann ohne eine entsprechende Ladeschutzschaltung erheblich günstiger hergestellt werden. Wenn der Akkumulator des Haushaltsgeräts aufgrund einer Beschädigung oder an dessen Lebensende auszutauschen ist, geht dies nicht mit der Entsorgung einer Ladeschutzschaltung einher. Die Ladeschutzschaltung ist vorzugsweise Bestandteil des verwendeten Ladegeräts. Bei einem Defekt der Ladeschutzschaltung muss folglich lediglich das wesentlich günstigere Ladegerät ersetzt werden.

In einer weiteren bevorzugten Ausführungsform des erfindungsgemäßen Haushaltsgeräts beinhaltet die Speichereinheit eine separate Entladeschutzschaltung, welche dazu eingerichtet ist, den Akkumulator während des Entladens vor ungeeigneten Temperaturen, Entladespannungen und/oder Entladeströmen zu schützen. Folglich umfasst das Batterie-Management-System der Speichereinheit eine Entladeschutzschaltung, jedoch keine Ladeschutzschaltung. Vorzugsweise weist das Haushaltsgerät einen oder mehrere Verbraucher von elektrischer Energie auf. Die Entladeschutzschaltung sorgt für einen sicheren Betrieb des Haushaltsgeräts, währenddessen dem einen oder den mehreren Verbrauchern elektrische Energie aus dem Akkumulator bereitgestellt wird.

Das erfindungsgemäße Haushaltsgerät wird ferner durch eine Anzeigeeinrichtung vorteilhaft weitergebildet, welche dazu eingerichtet ist, einem Benutzer optisch anzuzeigen, ob die spezifische Prüfimpedanz im Ladegerät erfasst wurde. Somit wird dem Benutzer signalisiert, ob das verwendete Ladegerät zum Aufladen des Akkumulators geeignet ist und das Aufladen des Akkumulators mit dem Ladegerät überhaupt möglich ist. Die Anzeigeeinrichtung kann beispielsweise eine oder mehrere Leuchtdioden, insbesondere LEDs, umfassen, über welche dem Benutzer optisch angezeigt werden kann, ob die spezifische Prüfimpedanz im Ladegerät erfasst wurde. Ferner kann die Anzeigeeinrichtung ein Display, beispielsweise ein Touchscreen, sein, über welches dem Benutzer optisch angezeigt werden kann, ob die spezifische Prüfimpedanz im Ladegerät erfasst wurde.

Die der Erfindung zugrundeliegende Aufgabe wird ferner durch ein Ladegerät der eingangs genannten Art gelöst, wobei die Ladeschaltung des erfindungsgemäßen Ladegeräts zumindest ein passives Bauelement umfasst, welches dazu eingerichtet ist, eine von einer Prüfeinheit der Speichereinheit des Haushaltsgeräts erfassbare Prüfimpedanz zu erzeugen. Über die durch das zumindest eine passive Bauelement erzeugbare Prüfimpedanz kann die Prüfeinheit dann feststellen, ob das Ladegerät zum Laden des Akkumulators des Haushaltsgeräts geeignet ist.

In einer bevorzugten Ausführungsform des erfindungsgemäßen Ladegeräts umfasst die Ladeschaltung eine Prüfschaltung mit mehreren passiven Bauelementen, welche dazu eingerichtet ist, eine von der Prüfeinheit der Speichereinheit des Haushaltsgeräts erfassbare Prüfimpedanz zu erzeugen. Die Prüfschaltung kann beispielsweise 2, 3, 4 oder mehr als 4 passive Bauelemente umfassen, welche dazu eingerichtet sind, eine von der Prüfeinheit erfassbare Prüfimpedanz zu erzeugen.

In einer anderen bevorzugten Ausführungsform des erfindungsgemäßen Ladegeräts ist das zumindest eine passive Bauelement ein Widerstand, ein Kondensator oder eine Induktivität. Alternativ umfasst die Prüfschaltung einen oder mehrere Widerstände, Kondensatoren und/oder Induktivitäten. Die Prüfschaltung kann also auch eine Kombination aus einem oder mehreren Widerständen, Kondensatoren und/oder Induktivitäten umfassen.

In einer Weiterbildung des erfindungsgemäßen Ladegeräts ist das zumindest eine passive Bauelement oder die Prüfschaltung mit einer den Ladestrom tragenden Zweidrahtverbindung elektrisch leitfähig verbunden. Über die elektrisch leitfähige Verbindung zu der den Ladestrom tragenden Zweidrahtverbindung wird die Impedanz auf die den Ladestrom tragenden Zweidrahtverbindung übertragen, sodass die Impedanz durch die Prüfeinheit an der den Ladestrom tragenden Zweidrahtverbindung erfasst werden kann.

Es ist ferner ein erfindungsgemäßes Ladegerät bevorzugt, bei welchem die Ladeschaltung eine separate Ladeschutzschaltung beinhaltet, welche den Akkumulator der Speichereinheit des Haushaltsgeräts während des Ladens vor ungeeigneten Temperaturen, Ladespannungen und/oder Ladeströmen schützt. Insbesondere ist die Ladeschutzschaltung in die Ladeschaltung oder das Ladegerät integriert. Insbesondere, wenn die Speichereinheit des Haushaltsgeräts keine entsprechende Ladeschutzschaltung aufweist, können durch eine ladegerätseitige Ladeschutzschaltung Beschädigungen der Akkumulatorzellen während des Ladens vermieden werden.

Die der Erfindung zugrundeliegende Aufgabe wird ferner durch ein Gerätesystem der eingangs genannten Art gelöst, wobei das Haushaltsgerät nach einer der vorstehend beschriebenen Ausführungsformen ausgebildet ist. Alternativ oder zusätzlich ist das Ladegerät des erfindungsgemäßen Gerätesystems nach einer der vorstehend beschriebenen Ausführungsformen ausgebildet. Hinsichtlich der Vorteile und Modifikationen des erfindungsgemäßen Gerätesystems wird somit auf die Vorteile und Modifikationen des erfindungsgemäßen Haushaltsgeräts und des erfindungsgemäßen Ladegeräts verwiesen.

Nachfolgend wird eine bevorzugte Ausführungsform der Erfindung unter Bezugnahme auf die beiliegende Zeichnung näher erläutert und beschrieben. Dabei zeigt:
- Fig. 1: ein Ausführungsbeispiel des erfindungsgemäßen Gerätesystems in einer schematischen Darstellung; und
- Fig. 2: ein weiteres Ausführungsbeispiel des erfindungsgemäßen Gerätesystems in einer schematischen Darstellung.

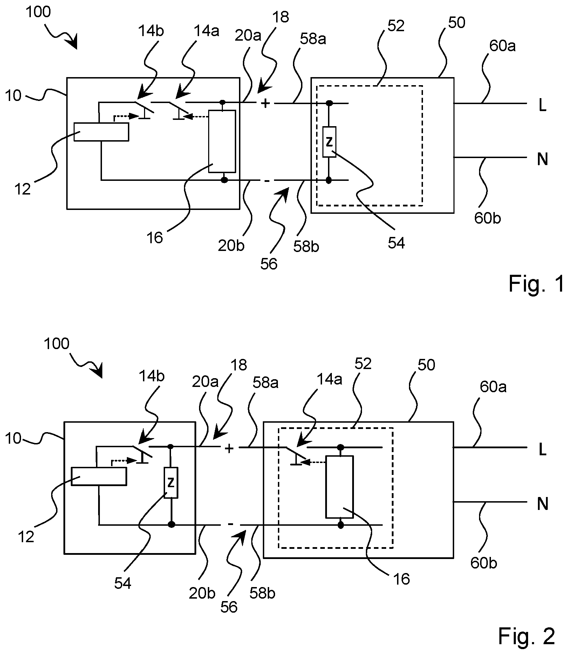

Die Fig. 1 zeigt ein Gerätesystem 100 nach einer ersten Ausführungsform mit einer Speichereinheit 10 eines mobilen Haushaltsgeräts und einem Ladegerät 50. Die Speichereinheit 10 ist ein Akkupack und weist einen wiederaufladbaren Akkumulator 12 zum Speichern von elektrischer Energie auf. Der Akkumulator 12 ist ein Lithium-Ionen-Akkumulator und umfasst eine oder mehrere zusammengeschaltete Lithium-Ionen-Zellen sowie die Ansteuerung einer Sperreinrichtung 14B. Die Sperreinrichtung 14B ist als sogenannte Second-Level-Protection ausgeführt.

Das Ladegerät 50 dient zum Aufladen des Akkumulators 12 der Speichereinheit 10. Hierzu weist das Ladegerät 50 eine Ladeschaltung 52 auf, wobei die Ladeschaltung 52 ein passives Bauelement 54 umfasst. Das passive Bauelement 54 kann ein Widerstand, ein Kondensator, eine Induktivität oder eine Kombination davon sein. Das passive Bauelement 54 ist dazu eingerichtet, eine von einer Prüfeinheit 16 der Speichereinheit 10 erfassbare Prüfimpedanz Z zu erzeugen.

Alternativ zu dem passiven Bauelement 54 kann die Ladeschaltung 52 auch eine Prüfschaltung mit mehreren passiven Bauelementen umfassen. In diesem Fall ist die Prüfschaltung dazu eingerichtet, eine von der Prüfeinheit 16 der Speichereinheit 10 erfassbare Prüfimpedanz zu erzeugen. Die Prüfschaltung kann einen oder mehrere Widerstände, Kondensatoren und/oder Induktivitäten umfassen.

Das passive Bauelement 54 ist mit einer den Ladestrom tragenden Zweidrahtverbindung 56 elektrisch leitfähig verbunden. Die den Ladestrom tragende Zweidrahtverbindung 56 umfasst die elektrischen Leitungen 58a, 58b. Das Ladegerät 50 ist dazu eingerichtet, über die elektrischen Leiter 60a, 60b mit einem Stromnetz verbunden zu werden. Die Ladeschaltung 52 des Ladegeräts 50 umfasst eine separate Ladeschutzschaltung, welche den Akkumulator 12 der Speichereinheit 10 während des Ladens vor ungeeigneten Ladespannungen und/oder Ladeströmen schützt. Das Ladegerät 50 ist dazu eingerichtet, den Akkumulator 12 im IU-Ladeverfahren bzw. im CC/CV (constant current / constant voltage) Ladeverfahren bei konstantem Strom oder mit konstanter Spannung zu laden.

Die Speichereinheit 10 umfasst zwei als elektronische Schalter ausgebildete Sperreinrichtungen 14A und 14B, welche dazu eingerichtet sind, einen Ladepfad zum Aufladen des Akkumulators 12 mittels des Ladegeräts 50 zu sperren oder freizugeben.

Die Prüfeinheit 16 der Speichereinheit 10 ist dazu eingerichtet, eine spezifische Prüfimpedanz im Ladegerät 50 zu erfassen und bei Erfassen der spezifischen Prüfimpedanz im Ladegerät 50 die First-Level Freigabe des Ladepfads durch die Sperreinrichtung 14A zu veranlassen. Über die Prüfimpedanz kann somit ein bestimmungsgemäßes Ladegerät 50 zum Aufladen des Akkumulators 12 erkannt werden womit ungeeignete Ladespannungen und/oder Ladeströme ausgeschlossen werden können. Die Second-Level Freigabe der Sperreinrichtung 14B überwacht in diesem schematischen Aufbau die Akkumulator-Temperatur(en) und das Ladungsniveau der Akkumulator-Zellen.

Das die Prüfimpedanz Z bzw. das diese bildende Bauelement 54 aufweisende bestimmungsgemäße Ladegerät 50 stimmt den Ladebetrieb optimal auf die Speichereinheit 10 und deren Akkumulator 12 ab, sodass die Speichereinheit 10 keine First-Level Ladeschutzschaltung benötigt, welche den Akkumulator 12 während des Ladens vor ungeeigneten Ladespannungen und/oder Ladeströmen schützt und somit auch der Entstehung von ungeeigneten Temperaturen vorbeugen kann. Die Einhaltung der optimalen Ladeparameter gewährleistet eine lange Lebensdauer der Speichereinheit 10 und schützt den Akkumulator 12 vor Überlastung im Ladebetrieb und daraus resultierender beschleunigter Alterung.

Da die Speichereinheit 10 nur eine separate Second-Level Ladeschutzschaltung aufweist, kann die Speichereinheit 10 vergleichsweise kostengünstig hergestellt werden. Das Ersetzen oder Austauschen der Speichereinheit 10 bedingt somit einen deutlich geringeren Kostenaufwand.

Die Speichereinheit 10 kann eine separate Entladeschutzschaltung aufweisen, mittels welcher der Akkumulator 12 während des Entladens vor ungeeigneten Temperaturen, Entladeschlussspannungen und/oder Entladeströmen geschützt wird. Das Haushaltsgerät, in welchem die Speichereinheit 10 eingesetzt wird, kann außerdem eine Anzeigeeinrichtung aufweisen, welche dazu eingerichtet ist, einem Benutzer optisch anzuzeigen, ob die spezifische Prüfimpedanz im Ladegerät 50 von der Prüfeinheit 16 erfasst wurde. Die Anzeigeeinrichtung kann eine oder mehrere Leuchtdioden oder ein Display, beispielsweise einen Touchscreen, umfassen.

Die Speichereinheit 10 weist eine Zweidrahtverbindung 18 auf. Die Zweidrahtverbindung 18 umfasst die elektrischen Leitungen 20a, 20b, welche zum Laden des Akkumulators 12 mit den elektrischen Leitungen 58a, 58b der Zweidrahtverbindung 56 des Ladegeräts 50 zu verbinden sind.

Die Fig. 2 zeigt ein Gerätesystem 100 nach einer zweiten Ausführungsform mit einer Speichereinheit 10 eines mobilen Haushaltsgeräts und einem Ladegerät 50. Die Speichereinheit 10 ist ein Akkupack und weist einen wiederaufladbaren Akkumulator 12 zum Speichern von elektrischer Energie auf. Der Akkumulator 12 ist ein Lithium-Ionen-Akkumulator und umfasst eine oder mehrere zusammengeschaltete Lithium-Ionen-Zellen sowie die Ansteuerung einer Sperreinrichtung 14B. Die Sperreinrichtung 14B ist als sogenannte Second-Level-Protection ausgeführt.

Das Ladegerät 50 dient zum Aufladen des Akkumulators 12 der Speichereinheit 10. Hierzu weist das Ladegerät 50 eine Ladeschaltung 52 sowie die Sperreinrichtung 14A auf.

Die Speichereinheit 10 umfasst ein passives Bauelement 54. Das passive Bauelement 54 kann ein Widerstand, ein Kondensator, eine Induktivität oder eine Kombination davon sein. Das passive Bauelement 54 ist dazu eingerichtet, eine von einer Prüfeinheit 16 von dem Ladegerät 50 erfassbare Prüfimpedanz Z zu erzeugen.

Alternativ zu dem passiven Bauelement 54 kann die Speichereinheit 10 auch eine Prüfschaltung mit mehreren passiven Bauelementen umfassen. In diesem Fall ist die Prüfschaltung dazu eingerichtet, eine von der Prüfeinheit 16 des Ladegeräts 50 erfassbare Prüfimpedanz zu erzeugen. Die Prüfschaltung kann einen oder mehrere Widerstände, Kondensatoren und/oder Induktivitäten umfassen.

Das passive Bauelement 54 ist mit einer den Ladestrom tragenden Zweidrahtverbindung 18 elektrisch leitfähig verbunden. Die den Ladestrom tragende Zweidrahtverbindung 18 umfasst die elektrischen Leitungen 20a, 20b. Das Ladegerät 50 ist dazu eingerichtet, über die elektrischen Leiter 60a, 60b mit einem Stromnetz verbunden zu werden. Die Ladeschaltung 52 des Ladegeräts 50 umfasst eine separate Ladeschutzschaltung, welche den Akkumulator 12 der Speichereinheit 10 während des Ladens vor ungeeigneten Ladespannungen und/oder Ladeströmen schützt. Das Ladegerät 50 ist dazu eingerichtet, den Akkumulator 12 im IU-Ladeverfahren bzw. im CC/CV (constant current / constant voltage) Ladeverfahren bei konstantem Strom oder mit konstanter Spannung zu laden.

Das Ladegerät 50 umfasst eine als elektronischer Schalter ausgebildete Sperreinrichtung 14A, welche dazu eingerichtet ist, einen Ladepfad zum Aufladen des Akkumulators 12 mittels der Ladeschaltung 52 zu sperren oder freizugeben. Die Prüfeinheit 16 des Ladegeräts 50 ist dazu eingerichtet, eine spezifische Prüfimpedanz in der Speichereinheit 10 zu erfassen und bei Erfassen der spezifischen Prüfimpedanz in der Speichereinheit 10 die First-Level Freigabe des Ladepfads durch die Sperreinrichtung 14A zu veranlassen. Über die Prüfimpedanz kann somit eine bestimmungsgemäße Speichereinheit 10 zum Aufladen des Akkumulators 12 erkannt werden womit ungeeignete Ladespannungen und/oder Ladeströme ausgeschlossen werden können. Die Second-Level Freigabe der Sperreinrichtung 14B überwacht in diesem schematischen Aufbau die Akkumulator-Temperatur(en) und das Ladungsniveau der Akkumulator-Zellen.

Die die Prüfimpedanz aufweisende bestimmungsgemäße Speichereinheit 10 und deren Akkumulator 12 sind für den Ladebetrieb optimal auf das Ladegerät 50 abgestimmt, sodass die Speichereinheit 10 keine First-Level Ladeschutzschaltung benötigt, welche den Akkumulator 12 während des Ladens vor ungeeigneten Ladespannungen und/oder Ladeströmen schützt und somit auch der Entstehung von ungeeigneten Temperaturen vorbeugen kann. Die Einhaltung der optimalen Ladeparameter gewährleistet eine lange Lebensdauer der Speichereinheit 10 und schützt den Akkumulator 12 vor Überlastung im Ladebetrieb und daraus resultierender beschleunigter Alterung.

Da die Speichereinheit 10 nur eine separate Second-Level Ladeschutzschaltung aufweist, kann die Speichereinheit 10 vergleichsweise kostengünstig hergestellt werden. Das Ersetzen oder Austauschen der Speichereinheit 10 bedingt somit einen deutlich geringeren Kostenaufwand.

Die Speichereinheit 10 kann eine separate Entladeschutzschaltung aufweisen, mittels welcher der Akkumulator 12 während des Entladens vor ungeeigneten Temperaturen, Entladeschlussspannungen und/oder Entladeströmen geschützt wird. Das Haushaltsgerät, in welchem die Speichereinheit 10 eingesetzt wird, kann außerdem eine Anzeigeeinrichtung aufweisen, welche dazu eingerichtet ist, einem Benutzer optisch anzuzeigen, ob die spezifische Prüfimpedanz in der Speichereinheit 10 von der Prüfeinheit 16 erfasst wurde. Die Anzeigeeinrichtung kann eine oder mehrere Leuchtdioden oder ein Display, beispielsweise einen Touchscreen, umfassen.

Die Speichereinheit 10 weist eine Zweidrahtverbindung 18 auf. Die Zweidrahtverbindung 18 umfasst die elektrischen Leitungen 20a, 20b, welche zum Laden des Akkumulators 12 mit den elektrischen Leitungen 58a, 58b der Zweidrahtverbindung 56 des Ladegeräts 50 zu verbinden sind.

Für alle Ausführungsformen gilt, dass die Sperreinrichtung 14A und/oder die Sperreinrichtung 14B entweder nur bei Erfassen der spezifischen Prüfimpedanz Z den Ladepfad freigibt (normal gesperrtes Verhalten) oder alternativ umgekehrt den freigegebenen Ladepfad bei Nicht-Erfassen der spezifischen Prüfimpedanz Z den Ladepfad sperrt (normal freigegebenes Verhalten). Des Weiteren sind Mischformen der Sperreinrichtungen 14A und 14B hinsichtlich des Verhaltens normal gesperrt und normal freigegeben möglich und hinsichtlich der Anforderungen an das Haushaltsgerät sinnvoll.

### Bezugszeichen

- 10: Speichereinheit
- 12: Akkumulator mit Second-Level-Protection-Ansteuerung
- 14A: Sperreinrichtung als First-Level-Protection
- 14B: Sperreinrichtung als Second-Level-Protection
- 16: Prüfeinheit mit First-Level-Protection-Ansteuerung
- 18: Zweidrahtverbindung
- 20a, 20b: elektrische Leitungen

- 50: Ladegerät
- 52: Ladeschaltung
- 54: passives Bauelement
- 56: Zweidrahtverbindung
- 58a, 58b: elektrische Leitungen
- 60a, 60b: Netzanschluss
- Z: spezifische Prüfimpedanz

- 100: Gerätesystem

## Patentansprüche

1. Speichereinheit (10) für ein mobiles Haushaltsgerät, insbesondere einen Staubsauger oder Saugroboter, mit
einem Akkumulator (12) zum Speichern von elektrischer Energie, wobei der Akkumulator (12) mittels eines Ladegeräts (50) wiederaufladbar ist; und
- eine Sperreinrichtung (14A), bevorzugt als First-Level-Protection, welche dazu eingerichtet ist, einen Ladepfad zum Aufladen des Akkumulators (12) mittels des Ladegeräts (50) zu sperren oder freizugeben;
wobei die Speichereinheit (10) eine Prüfeinheit (16) umfasst, welche dazu eingerichtet ist, eine spezifische Prüfimpedanz (Z) im Ladegerät (50) zu erfassen und bei Erfassen der spezifischen Prüfimpedanz im Ladegerät (50) eine Freigabe des Ladepfads durch die Sperreinrichtung (14A) zu veranlassen und/oder bei Nicht-Erfassen der spezifischen Prüfimpedanz (Z) im Ladegerät (50) eine Sperrung des Ladepfads durch die Sperreinrichtung (14A) zu veranlassen.

2. Speichereinheit (10) nach einem der vorstehenden Ansprüche,
umfassend eine Anzeigeeinrichtung, welche dazu eingerichtet ist, einem Benutzer optisch anzuzeigen, ob die spezifische Prüfimpedanz im Ladegerät (50) erfasst wurde.

3. Speichereinheit (10) für ein mobiles Haushaltsgerät, insbesondere einen Staubsauger oder Saugroboter, mit
- einem Akkumulator (12) zum Speichern von elektrischer Energie, wobei der Akkumulator (12) mittels eines Ladegeräts (50) wiederaufladbar ist;
wobei die Speichereinheit (10) zumindest ein passives Bauelement (54) umfasst, welches dazu eingerichtet ist, eine von einer Prüfeinheit (16) des Ladegeräts (50) erfassbare Prüfimpedanz zu bilden.

4. Speichereinheit (10) nach einem der vorstehenden Ansprüche,
wobei die Speichereinheit (10) eine Ladeschutzschaltung (14B), bevorzugt als Second-Level-Protection, beinhaltet, welche den Akkumulator (12) während des Ladens vor unzulässigen Akkumulator-Temperatur(en) und/oder Ladungsniveaus der Akkumulator-Zellen schützt.

5. Speichereinheit (10) nach Anspruch 4,
wobei die Speichereinheit (10) keine separate Ladeschutzschaltung als First-Level-Protection beinhaltet, welche den Akkumulator (12) während des Ladens vor ungeeigneten Ladespannungen und/oder Ladeströmen schützt.

6. Ladegerät (50), mit
- einer Ladeschaltung (52) zum Aufladen eines Akkumulators (12) einer Speichereinheit (10) eines Haushaltsgeräts;
wobei die Ladeschaltung (52) zumindest ein passives Bauelement (54) umfasst, welches dazu eingerichtet ist, eine von einer Prüfeinheit (16) der Speichereinheit (10) des Haushaltsgeräts erfassbare Prüfimpedanz (Z) zu bilden.

7. Ladegerät (50) nach Anspruch 6,
**dadurch gekennzeichnet, dass** die Ladeschaltung (52) eine Prüfschaltung mit mehreren passiven Bauelementen (54) umfasst, welche dazu eingerichtet ist, eine von der Prüfeinheit (16) der Speichereinheit (10) des Haushaltsgeräts erfassbare Prüfimpedanz zu bilden.

8. Ladegerät (50) nach Anspruch 6 oder 7,
**dadurch gekennzeichnet, dass**
- das zumindest eine passive Bauelement (54) ein Widerstand, ein Kondensator oder eine Induktivität ist; oder
- die Prüfschaltung einen oder mehrere Widerstände, Kondensatoren und/oder Induktivitäten umfasst.

9. Ladegerät (50) nach einem der Ansprüche 6 bis 8,
**dadurch gekennzeichnet, dass** das zumindest eine passive Bauelement (54) oder die Prüfschaltung mit einer den Ladestrom tragenden Zweidrahtverbindung (18, 56) elektrisch leitfähig verbunden ist.

10. Ladegerät (50), mit
- einer Ladeschaltung (52) zum Aufladen eines Akkumulators (12) einer Speichereinheit (10) eines Haushaltsgeräts; und
- einer Sperreinrichtung (14A), bevorzugt als First-Level-Protection, welche dazu eingerichtet ist, einen Ladepfad zum Aufladen des Akkumulators (12) mittels der Ladeschaltung (52) zu sperren oder freizugeben;
wobei die Ladeschaltung (52) eine Prüfeinheit (16) umfasst, welche dazu eingerichtet ist, eine spezifische Prüfimpedanz in der Speichereinheit (10) zu erfassen und bei Erfassen der spezifischen Prüfimpedanz in der Speichereinheit (10) eine Freigabe des Ladepfads durch die Sperreinrichtung (14A) zu veranlassen und/oder bei Nicht-Erfassen der spezifischen Prüfimpedanz (Z) in der Speichereinheit (10) eine Sperrung des Ladepfads durch die Sperreinrichtung (14A) zu veranlassen.

11. Ladegerät (50) nach einem der Ansprüche 6 bis 10,
**dadurch gekennzeichnet, dass** die Ladeschaltung (52) eine separate Ladeschutzschaltung beinhaltet, welche den Akkumulator (12) der Speichereinheit (10) des Haushaltsgeräts während des Ladens vor ungeeigneten Ladespannungen und/oder Ladeströmen schützt.

12. Ladegerät (50) nach einem der vorstehenden Ansprüche 6 bis 11,
umfassend eine Anzeigeeinrichtung, welche dazu eingerichtet ist, einem Benutzer optisch anzuzeigen, ob die spezifische Prüfimpedanz in der Speichereinheit (10) erfasst wurde.

13. Gerätesystem (100), mit
- einer Speichereinheit (10) für ein mobiles Haushaltsgerät, insbesondere einen Staubsauger oder Saugroboter, wobei die Speichereinheit (10) einen wiederaufladbaren Akkumulator (12) zum Speichern von elektrischer Energie umfasst; und
- einem Ladegerät (50) zum Aufladen des Akkumulators (12) der Speichereinheit (10) des Haushaltsgeräts;
wobei die Speichereinheit (10) nach einem der Ansprüche 1 bis 5 und/oder das Ladegerät (50) nach einem der Ansprüche 6 bis 12 ausgebildet ist.

14. Gerätesystem (100), weiter umfassend ein mobiles Haushaltsgerät,
insbesondere einen Staubsauger oder Saugroboter, wobei die Speichereinheit (10) nach einem der Ansprüche 1 bis 5 ausgebildet und in dem mobilen Haushaltsgerät angeordnet ist.
